# EUROPÄISCHE PATENTSCHRIFT

(11) **EP 0 641 033 B1**
(45) Veröffentlichungstag und Bekanntmachung des Hinweises auf die Patenterteilung: **31.03.1999**
(21) Anmeldenummer: 94250194.1
(22) Anmeldetag: 28.07.1994
(51) Int. Cl.: H01M 4/88, C25B 11/03

(54) **Verfahren zur Herstellung katalytisch wirksamer Gasdiffusionselektroden für elektrochemische Zellen**
Method of making a catalytically active gas diffusion electrode for electrochemical cells
Procédé pour la fabrication d'une électrode catalytiquement active à diffusion gazeuse pour cellules électrochimiques

(30) Priorität: 31.08.1993 DE 4329226; 30.05.1994 DE 4419383
(43) Veröffentlichungstag der Anmeldung: 01.03.1995
(73) Patentinhaber: Compur Monitors Sensor Technology GmbH, 81539 München (DE)
(72) Erfinder: Braden, Christoph, Dr.Dipl.-Phys., D-50937 Köln (DE); Gojowczik, Martina, D-40789 Monheim (DE); Pettinger, Karl-Heinz, Dr. Dipl.-Chem., D-85748 Garching (DE)
(74) Vertreter: Geyer, Ulrich F., Dr. Dipl.-Phys.

(56) Entgegenhaltungen:
- EP-A- 0 120 212
- EP-A- 0 344 089
- US-A- 4 185 131
- US-A- 4 229 490
- US-A- 5 190 813
- PATENT ABSTRACTS OF JAPAN vol. 17, no. 307 (E-1379) 11. Juni 1993 & JP-A-05 029 005 (HONDA MOTOR CO LTD) 5. Februar 1993
- DATABASE WPI Week 8918, Derwent Publications Ltd., London, GB; AN 89-132633 & JP-A-1 075 532 (NIPPON TELEG & TELEPH) 22. März 1989
- PATENT ABSTRACTS OF JAPAN vol. 15, no. 248 (C-0843) 25. Juni 1991 & JP-A-03 079 783 (MITSUBISHI ELECTRIC CORP) 4. April 1991

## Beschreibung

Die Erfindung betrifft ein Verfahren zur Herstellung Katalytisch wirksamer Gasdiffusionselektroden für elektrochemische Zellen, bei dem eine hydrophobe, gasdurchlässige Membran mit einem Katalysator in feinverteilter Form beschichtet wird.

Die Membran bildet dabei eine Diffusionsbarriere, die in feinverteilter Form einen elektrisch leitenden Katalysator enthält. Bei elektrochemischen Gassensoren für den Umwelt- und Arbeitsschutz werden katalysatorbeschichtete Gasdiffusionsmembranen zur quantitativen elektrochemischen Umsetzung und damit zur Messung von Gasspuren im ppm- und ppb-Bereich in großen Stückzahlen eingesetzt. Die Sensorspezifikationen (Empfindlichkeit, Temperaturabhängigkeit, Alterungsbeständigkeit etc.) und vor allem die Exemplarstreuung werden maßgebend durch die Homogenität, die Haftfähigkeit und die Reinheit der aufgetragenen Katalysatorbeschichtung bestimmt.

Eine große effektive Katalysatorfläche ist im Hinblick auf eine große Stromausbeute der Gasdiffusionselektrode ebenfalls von großer Bedeutung. Die verwendeten Membranen (typischerweise Membranen aus Polytetrafluorethylen, auch mit der Abkürzung PTFE oder dem Handelsnamen Teflon bekannt) aus Polytetrafluorethylen, auch mit der müssen eine Gasdiffusion von außen zur kalalysatorbeschichteten Innenseite zulassen, d.h. gasdurchlässig sein. Außerdem muß die Membran hydrophob sein, um eine überflutung durch den Elektrolyt der Zelle zu verhindern. Die Hydrophobie der Katalysatorschicht läßt sich durch den Zusatz von Teflon oder anderen hydrophoben Materialien bei der Beschichtung mit dem Katalysatormaterial erreichen.

Eine ausreichend große effektive Oberfläche zur Erzielung einer guten Stromausbeute in der elektrochemischen Meßzelle wird dadurch erreicht, daß der Katalysator in feinverteilter Form als Pulver oder im Falle von Platin als Platin-Mohr auf die Membran aufgebracht wird. Feines Metallpulver oder Platin-Mohr ist aufgrund der Kapillarwirkung stark hydrophil und bildet zusammen mit einer Dispersion eines hydrophoben Materials, z.B. einer PTFE-Dispersion, eine thixotrope Mischung mit instabilen Viskositäten, die obendrein zur Koagulation neigt. Solche Mischungen werden nach dem Stand der Technik auf die Membran aufgebracht und durch Trocknen, thermisches Tempern und mechanisches Pressen stabilisiert (siehe z.B. DE 1 268 118 und L.W. Niederach, H.R. Alford, J. Electrochem. Soc. (1965), S. 117). Bei diesen Verfahren läßt aber die Reproduzierbarkeit der Schichtdicke und die Homogenität der Beschichtung, für die ein reproduzierbares elektrochemisches Verhalten der fertigen Gasdiffusionselektrode Voraussetzung sind, zu wünschen übrig. Ferner ist eine gezielte strukturierte Beschichtung von Membranfeldern nur mit erheblichen Schwierigkeiten zu realisieren und führt zu einer zusätzlichen Verschlechterung der Reproduzierbarkeit.

Aus der US-A-4,229,490 ist ein Verfahren zur Herstellung einer Gaszellenelektrode bekannt, bei der ein dünnes karboniertes papierförmiges Substrat mit PTFE imprägniert und dann eine Katalysatorschicht mittels eines Siebdruckverfahrens aufgebracht wird.

Der Erfindung liegt die Aufgabe zugrunde, Verfahren zur Herstellung katalytisch wirksamer Gasdiffusionselektroden für elektrochemische Zellen zu entwickeln, welche eine hohe Reproduzierbarkeit der Einzelelektroden und eine senr gute Homogenität der Katalysatorbeschichtung gewährleisten. Außerdem sollen die Verfahren leicht zu automatisieren und auch zur Herstellung komplizierter strukturierter Elektrodengeometrien oder Miniaturelektroden geeignet sein.

Die Aufgabe wird erfindungsgemäß dadurch gelöst, daß eine Strukturierungsmaske mit Aussparungen auf die hydrophobe, gasdurchlässige Membran aufgebracht und der Katalysator in Pulverform mit einer PTFE-Dispersion und einem Polyethergel zu einer Paste dispergiert wird, die mit Hilfe einer Dosiervorrichtung in die Aussparungen der Strukturierungsmaske aufgetragen wird. Vorteilhafterweise wird danach die auf die Membran aufgebrachte, die Katalysatorpaste enthaltende Strukturierungsmaske mit einer Folie abgedeckt und der gesamte Schichtverbund mit einem Druck von 1 bar bis 20 bar gepreßt. Anschließend wird das Polyethergel vorzugsweise durch Spülen und Trocknen vollständig aus der Katalysatorschicht entfernt. Gemäß einer Abwandlung der Erfindung können ferner durch die Strukturierungsmaske den Aussparungen zugeordnete Membranfelder abgegrenzt werden.

Die Strukturierungsmaske weist in vorteilhafter Ausgestaltung eine Dicke von 50 bis 700 µm auf. Wahlweise können als Katalysatormaterial entweder Goldpulver, Silberpulver, Platin-Mohr oder Ruthenium-Mohr verwendet werden. Mit der Erfindung werden folgende Vorteile erzielt:
- Hohe Reproduzierbarkeit und geringe Exemplarstreuung bei der Massenfertigung von Gasdiffusionselektroden.
- Sehr gute Homogenität, d.h. gleichmäßige Schichtdicke und Flächendicke beim Auftrag der Katalysatorschicht.
- Für den Fall der Anwendung des Verfahrens entsteht bei Berücksichtigung des kostspieligen Katalysatormaterials kein Verlust, da die Beschichtung nur an den gewünschten Stellen in den Aussparungen der Strukturierungsmaske erfolgt.
- Durch den Zusatz des Polyethergels werden die Fließeigenschaften der thixotropen Katalysator-Teflondispersion stabilisiert, so daß eine hochpräzise Dosierung möglich wird und beim Pressen ein gleichmäßiges Verlaufen und damit eine homogene Verteilung der Katalysatormasse erfolgt.
- Die Verfahren lassen sich auch mit wenig Aufwand automatisieren, so daß eine kostengünstige Fertigung bei hoher Reproduzierbarkeit möglich ist.

Im folgenden wird die Erfindung anhand von Zeichnungen und Ausführungsbeispielen näher erläutert. Es zeigen:
- Fig. 1: einen aus Strukturierungsmaske, Membran und Unterlage bestehenden Schichtverbund,
- Fig. 2: einen ähnlich wie in Fig. 1 aufgebauten Schichtverbund, bei dem einzelne Membranen durch die Strukturierungsmaske abgegrenzt sind,
- Fig. 3a -3c: Draufsichten von verschiedenen Strukturierungsmasken zur Massenfertigung von Gasdiffusionselektroden.
- Fig. 4: Herstellung nach Schablonendruckverfahren und
- Fig. 5: Herstellung nach Filmziehverfahren (beide nicht erfindungsgemäß).

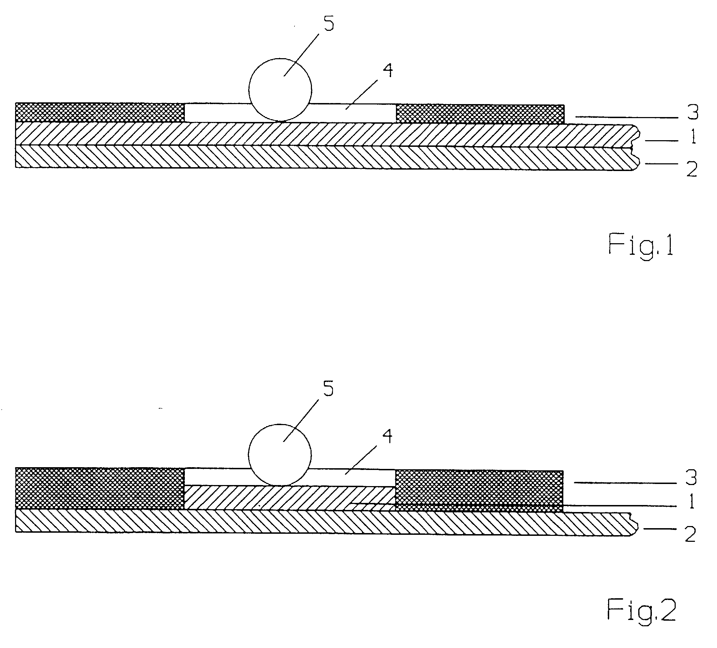

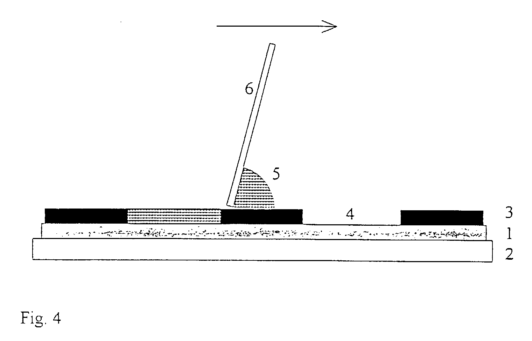

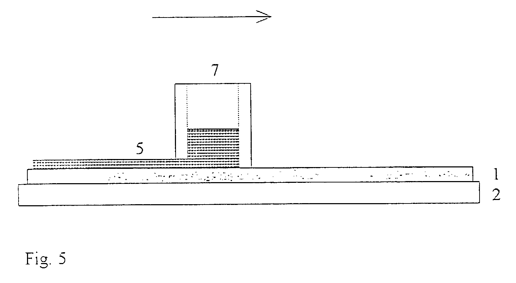

In den Figuren 1 bis 3c wird eine Ausgestaltung der Erfindung gemäß dem Verfahren des Anspruches 1 dargestellt. Die Anwendung des Schablonendruckverfahrens ist in Figur 4 dargestellt. Ein Filmziehverfahren ist in Figur 5 dargestellt.

Zu Figur 1.

Die zu beschichtende Gasdiffusionsmembran, z.B. eine poröse PTFE-Membran 1 wird auf einer ebenen Unterlage, z.B. einer Glasplatte 2, aufgespannt und mit einer Strukturierungsmaske 3 aus PVC, Edelstahl, PTFE abgedeckt. Die Strukturierungsmaske 3 ist mit Aussparungen 4 versehen, deren Form und Größe mit den gewünschten Elektrodenflächen übereinstimmen. Durch die Dicke der Strukturierunsmaske 3, die üblicherweise in einem Bereich von 0,05 bis 0,7 mm liegt, wird die Dicke der Katalysatorschicht festgelegt. Das Katalysatormaterial (Zusammensetzung nachfolgend beschrieben) wird in Form einer Paste mit Hilfe einer handelsüblichen Mikrodosiervorrichtung in die Aussparungen 4 gebracht. In den Figuren 1 und 2 ist jeweils ein Tropfen 5 der in die Aussparungen 4 eindosierten Katalysatorpaste angedeutet.

Die Katalysatorpaste wird in der Weise hergestellt, daß das pulverförmige Katalysatormaterial, z.B. Platin-Mohr, mit einer handelsüblichen PTFE-Dispersion, z.B. Hostaflon TF 5032 der Firma Hoechst AG, zusammen mit einem Polyethergel vermischt und dispergiert wird. Polyether sind gut lösliche Polymere, die nicht thixotrooe Gele bilden. Sie sind außerordentlich stabil gegen Säuren und Laugen. Die Wasserlöslichkeit nimmt mit steigender Temperatur ab, weil die Hydrophilie des Moleküls durch Aufspaltung der Wasserstoffbrücken-Bindungen verringert wird. Die Molmasse muß über 2.000 g/mol liegen. Ein geeigneter Polyether ist z.B. Poly-(ethylenglykol)methylether (Handelsprokukt der Fa. Aldrich). Ein Ansatz für die Katalysatorpaste wird z.B. in der Weise hergestellt, daß zu einer aus 0,1 g Polyether, 0,4 ml Hostaflonlösung und 2,0 ml Wasser bestehenden Lösung 1,2 g Platin-Mohr zugegeben werden und die Mischung anschließend gut homogenisiert wird.

Durch den Zusatz des Polyethergels werden die Fließeigenschaften der thixotropen Katalysatorpaste im Hinblick auf eine unerwünschte Entmischung und Koagulation stabilisiert. Diese Katalysatorpaste wird dann - wie schon erwähnt - in ein oder mehreren Schritten exakt dosiert in die Aussparungen 4 der Strukturierungsmaske 3 gebracht. Das Aufbringen der Katalysatorpaste kann entweder gemäß Fig. 1 in der Weise erfolgen, daß das Katalysatormaterial auf die unter den Aussparungen 4 liegenden Membranfelder einer gemeinsamen, zusammenhängenden Membran 1 aufgetragen wird oder daß gemäß Fig. 2 einzelne, getrennte, durch die Strukturierungsmaske 3 fixierte Membranen 1 in einem gemeinsamen Arbeitsgang beschichtet werden. Die vorgefertigten Einzelmembranen 1 werden dazu in die Aussparungen 4 eingelegt und dort während der Beschichtung durch die Strukturierunsmaske 3 fixiert.

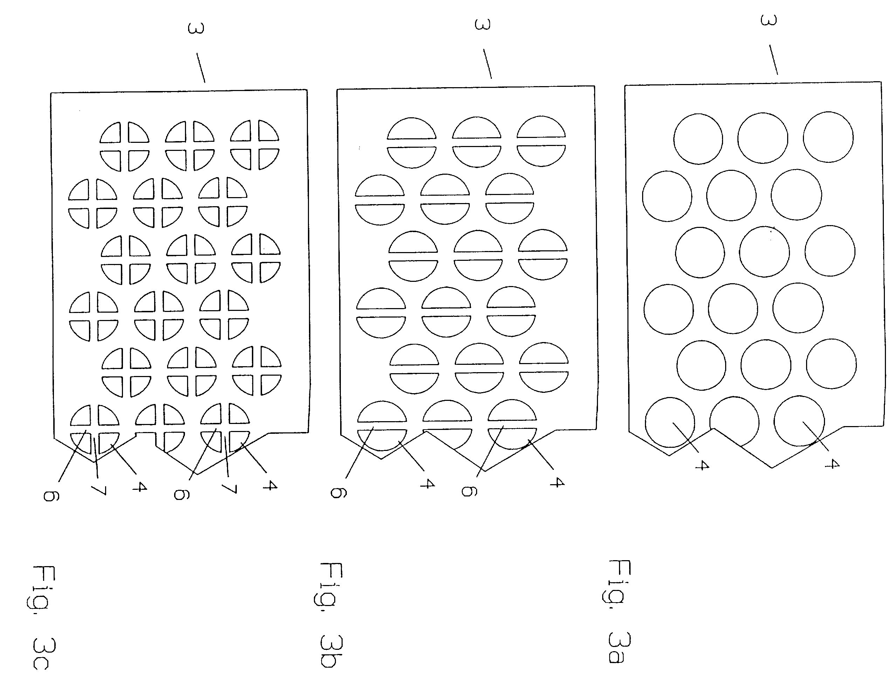

Die Fig. 3a bis 3c zeigen verscniedene Strukturierungsmasken in Draufsicht. Gemäß Fig. 3a bestehen die Aussparungen 4 aus Kreisflächen und gemäß Fig. 3b und 3c aus sektorförmigen Flächen. Die sektorförmigen Flächen werden durch Unterteilung mittels der Stege 6 und 7 gebildet. Solche Maskenformen können für die Herstellung von Multielektrodensensoren verwendet werden.

Nach der Beschichtung der Membranfelder mit der Katalysatorpaste wird die Strukturierungsmaske (Fig. 1 und Fig. 2) mit einer Trennfolie (nicht gezeigt), z.B. einer 50 µm dicken Polyethylenfolie, abgedeckt und der gesamte Schichtverbund mit einem Druck im Bereich von 1 bar bis 20 bar vorgepreßt. Dabei verläuft die Katalysatorpaste in den Aussparungen 4 und füllt sie gleichmäßig aus, so daß eine homogene Flächenverteilung auf den Membranfeldern erzielt wird. Anschließend kann die Strukturierunsmaske 3 entfernt werden. Die Katalysatorschicht wird dann bei Raumtemperatur einige Stunden getrocknet.

Nach dem Trocknen erfolgt zweckmäßig eine erneute Pressung des Schichtverbundes bei Drücken von 5 bar bis 50 bar. Das in der Katalysatorschicht noch vorhandene Polyethergel wird durch mehrmaliges Spülen in destilliertem Wasser oder einem anderen Lösungsmittel und anschließendes Trocknen vollständig aus der Katalysatorschicht entfernt. Abschließend wird der Schichtverbund entsprechend den Herstellerangaben für die PTFE-Dispersion z.B. 90 Minuten lang bei Temperaturen von 275 Grad Celsius getempert und von der Unterlage 2 abgezogen. Die fertig beschichtete Membran kann dann ebenfalls durch ein letztes Pressen mit Drücken von 10 bar bis 50 bar noch weiter stabilisiert werden.

Zwei weitere Verfahren sind in den Figuren 4 und 5 gegeben. So zeigt Figur 4 das Schablonendruckverfahren, und Figur 5 das Filmziehverfahren zur Herstellung unstrukturierter zusammenhängender Schichten.

Nach diesen Verfahren wird nach Herstellung der entsprechenden Paste und nach Auflegung der Strukturierungsmaske mit den Aussparungen 4 bzw. mit dem Lochmuster der Aussparungen auf die Membran, die Paste 5 beispielsweise mit einem Rakel oder einer Metallkante 6 durch die Druckschablone 3 auf Membran 1 gestrichen. Das Ganze liegt auf einer ebenen Unterlage 2. Die Dicke der Schablone liegt dabei je nach Anwendungsfall zwischen 50 und 700 µm. Auch dieses Verfahren kann automatisiert werden. Bei der Anwendung des Filmziehverfahrens für unstrukturierte Schichten, d. h. bei denen keine Maske verwendet wird, sondern bei dem die Paste 5 gleichmäßig auf die Membran 1 aufgebracht wird, lassen sich beispielsweise auch sehr dünne Schichten bzw. Gasdiffusionselektroden erzeugen. Das Ganze liegt wiederum auf einer ebenen Unterlage 2. Die Paste 5 wird mittels eines Filmziehrahmens 7 aufgebracht. Dieses Filmziehverfahren kann im weiteren durch herkömmliche Filmziengeräte realisiert werden, die aus der Dünnschichtchromatographie bekannt sind. Die Elektroden können bei den so hergestellten unstrukturierten Schichten anschließend aus der beschichteten Membran vereinzelt werden. Dabei kann beispielsweise die Geometrie für die auszubringenden Gasdiffusionselektroden so gewählt werden, daß möglichst wenig Abfall entsteht, und somit möglichst wenig des teuren Pastenmaterials verschwendet wird. Es hat sich gezeigt, daß Gasdiffusionselektroden, die nach dem Schablonendruckverfahren oder nach dem Filmziehverfahren hergestellt sind den Anforderungen ebenso genügen.

## Patentansprüche

1. Verfahren zur Herstellung katalytisch wirksamer Gasdiffusionselektroden für elektrochemische Zellen, bei dem eine hydrophobe gasdurchlässige Membran mit einem Katalysator in feinverteilter Form beschichtet wird,
dadurch gekennzeichnet,
daß eine Strukturierungsmaske (3) mit Aussparungen (4) auf die Membran (1) aufgebracht wird und der Katalysator in Pulverform mit einer PTFE-Dispersion und einem Polyethergel zu einer Paste dispergiert wird, die mit Hilfe einer Dosiervorrichtung in die Aussparungen (4) der Strukturierungsmaske (3) aufgetragen wird.

2. Verfahren nach Anspruch 1,
dadurch gekennzeichnet,
daß die auf die Membran (1) aufgebrachte, die Katalysatorpaste enthaltene Strukturierungsmaske (3) mit einer Folie abgedeckt wird und der gesamte Schichtverbund (1, 2, 3) mit einem Druck von 1 bar bis 20 bar gepreßt wird.

3. Verfahren nach Anspruch 1 bis 2,
dadurch gekennzeichnet,
daß das Polyethergel durch Spülen und anschließendes Trocknen vollständig aus der Katalysatorschicht entfernt wird.

4. Verfahren nach Anspruch 1 bis 3,
dadurcn gekennzeichnet,
daß durch die Strukturierungsmaske (3) in den Aussparungen (4) einzelne Membranen (1) fixiert und mit der Paste beschichtet werden.

5. Verfahren zur Herstellung katalytisch wirksamer Gasdiffusionselektroden nach einem oder mehreren der vorhergehenden Ansprüche, dadurch gekennzeichnet, daß eine Strukturierungsmaske mit einer Dicke von 0,05 - 0,7 mm eingesetzt wird.

6. Verfahren zur Herstellung katalytisch wirksamer Gasdiffusionselektroden nach einem oder mehreren der vorhergehenden Ansprüche, dadurch gekennzeichnet, daß als Katalysator Goldpulver verwendet wird.

7. Verfahren zur Herstellung katalytisch wirksamer Gasdiffusionselektroden nach einem oder mehreren der vorhergehenden Ansprüche, dadurch gekennzeichnet, daß als Katalysator Platin-Mohr verwendet wird.

8. Verfahren zur Herstellung katalytisch wirksamer Gasdiffusionselektroden nach einem oder mehreren der vorhergehenden Ansprüche, dadurch gekennzeichnet, daß als Katalysator Ruthenium-Mohr verwendet wird.

9. Verfahren zur Herstellung katalytisch wirksamer Gasdiffusionselektroden nach einem oder mehreren der vorhergehenden Ansprüche, dadurch gekennzeichnet, daß als Katalysator Silberpulver verwendet wird.

## Claims

1. A method for manufacturing catalytically active gas diffusion electrodes for electrochemical cells in which a hydrophobic gas-permeable membrane is coated with a catalyst having a finely dispersed form, characterised in that a structuring mask (3) having cut outs (4)is placed on said membrane (1) and the catalyst in powdered form is dispersed with a PTFE-dispersion and a polyether gel to a paste, which is applied to the cut outs (4) of the structuring mask (3) with a closing device.

2. The method as defined in claim 1, characterised in that the structuring mask containing the catalytic paste, which is placed on said membrane (1) is covered with a film and the thus formed entire layered composite ((1, 2, 3) is compressed with a pressure of 1 bar to 20 bar.

3. The method as defined in claim 1 or 2, characterised by removing the polyether gel completely from the catalytic coat by washing and subsequent drying.

4. The method as defined in anyone of claims 1 to 3, characterised by fixing individual membranes through the structuring masks in the cut outs and coating the membranes with the paste.

5. The method for manufacturing catalytically active gas diffusion electrodes as defined in one or more of the preceding claims, characterised by using a pressure template having a thickness between 0,05 - 0,7 mm.

6. The method for manufacturing catalytically active gas diffusion electrodes as defined in one or more of the preceding claims, characterised by the catalyst being gold powder.

7. The method for manufacturing catalytically active gas diffusion electrodes as defined in one or more of the preceding claims, characterised by the catalyst being platinum black.

8. The method for manufacturing catalytically active gas diffusion electrodes as defined in one or more of the preceding claims, characterised by the catalyst being ruthenium mohr.

9. The method for manufacturing catalytically active gas diffusion electrodes as defined in one or more of the preceding claims, characterised by the catalyst being silver powder.

## Revendications

1. Procédé de réalisation d'électrodes de diffusion de gaz à action catalytique pour des cellules électrochimiques, dans lequel une membrane hydrophobe perméable aux gaz est revêtue d'un catalyseur sous forme finement divisée, caractérisé en ce qu'un masque de structuration (3) muni d'évidements (4) est disposé sur la membrane (1) et en ce que le catalyseur est dispersé sous forme pulvérulente avec une dispersion de PTFE et un gel de polyéther pour former une pâte, laquelle pâte est rapportée dans les évidements (4) du masque de structuration (3) à l'aide d'un dispositif de dosage.

2. Procédé selon la revendication 1, caractérisé en ce que le masque de structuration (3) rapporté sur la membrane (1) et contenant la pâte de catalyseur est recouvert d'une feuille et en ce que l'ensemble du sandwich (1, 2, 3) est mis sous presse à une pression de 1 à 20 bars.

3. Procédé selon la revendication 1 ou 2, caractérisé en ce que le gel de polyéther est complètement retiré de la couche de catalyseur par rinçage et séchage subséquent.

4. Procédé selon l'une des revendications 1 à 3, caractérisé en ce que des membranes individuelles (1) sont fixées dans les évidements (4) du masque de structuration (3) et sont recouvertes de la pâte.

5. Procédé de réalisation d'électrodes de diffusion de gaz à action catalytique selon l'une quelconque des revendications précédentes, caractérisé en ce que l'on utilise un masque de structuration ayant une épaisseur de 0,05 à 0,7 mm.

6. Procédé de réalisation d'électrodes de diffusion de gaz à action catalytique selon l'une quelconque des revendications précédentes, caractérisé en ce que le catalyseur est une poudre d'or.

7. Procédé de réalisation d'électrodes de diffusion de gaz à action catalytique selon l'une quelconque des revendications précédentes, caractérisé en ce que le catalyseur est du noir de platine.

8. Procédé de réalisation d'électrodes de diffusion de gaz à action catalytique selon l'une quelconque des revendications précédentes, caractérisé en ce que le catalyseur est du noir de ruthénium.

9. Procédé de réalisation d'électrodes de diffusion de gaz à action catalytique selon l'une quelconque des revendications précédentes, caractérisé en ce que le catalyseur est une poudre d'argent.
